(19) Europäisches Patentamt / European Patent Office / Office européen des brevets

(11) **EP 2 920 889 B1**

(12) **FASCICULE DE BREVET EUROPEEN**

(45) Date de publication et mention
de la délivrance du brevet:
**26.04.2017 Bulletin 2017/17**

(51) Int Cl.:
*H04B 3/54* (2006.01)        *H04N 19/103* (2014.01)
*H04N 19/164* (2014.01)        *H04N 19/63* (2014.01)

(21) Numéro de dépôt: **13792659.8**

(22) Date de dépôt: **15.11.2013**

(86) Numéro de dépôt international:
**PCT/EP2013/073927**

(87) Numéro de publication internationale:
**WO 2014/076230 (22.05.2014 Gazette 2014/21)**

(54) **PROCÉDÉ ET SYSTÈME DE TRANSMISSION DE DONNÉES VIDÉO SUR UN CANAL DE TRANSMISSION PAR COURANTS PORTEURS EN LIGNE**

VERFAHREN UND SYSTEM ZUM SENDEN VON VIDEODATEN ÜBER EINEN KANAL ZUR ÜBERTRAGUNG MITTELS STROMLEITUNGSKOMMUNIKATION

METHOD AND SYSTEM FOR TRANSMITTING VIDEO DATA OVER A CHANNEL FOR TRANSMISSION BY POWERLINE COMMUNICATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.11.2012 FR 1260899**

(43) Date de publication de la demande:
**23.09.2015 Bulletin 2015/39**

(73) Titulaire: **SAGEMCOM BROADBAND SAS**
**92500 Rueil Malmaison (FR)**

(72) Inventeur: **SAMY, Roger**
**F-92500 Rueil Malmaison (FR)**

(74) Mandataire: **Le Guen-Maillet**
**5, place de Newquay**
**BP 70250**
**35802 Dinard Cedex (FR)**

(56) Documents cités:
**WO-A2-2007/008680        GB-A- 2 393 370**

- **GI HUN LEE ET AL: "Three-dimensional DCT/WT compression using motion vector segmentation for low bit-rate video coding", PROCEEDINGS / INTERNATIONAL CONFERENCE ON IMAGE PROCESSING : OCTOBER 26 - 29, 1997, SANTA BARBARA, CALIFORNIA, IEEE COMPUT. SOC, LOSALAMITOS, CALIF. [U.A.], vol. 3, 26 octobre 1997 (1997-10-26), pages 456-459, XP010253805, ISBN: 978-0-8186-8183-7**
- **YA-QIN ZHANG ET AL: "MOTION-COMPENSATED WAVELET TRANSFORM CODING FOR COLOR VIDEO COMPRESSION", IEEE TRANSACTIONS ON CIRCUITS AND SYSTEMS FOR VIDEO TECHNOLOGY, IEEE SERVICE CENTER, PISCATAWAY, NJ, US, vol. 2, no. 3, 1 septembre 1992 (1992-09-01), pages 285-296, XP000299259, ISSN: 1051-8215, DOI: 10.1109/76.157160**
- **SECKER A ET AL: "Motion-compensated highly scalable video compression using an adaptive 3D wavelet transform based on lifting", PROCEEDINGS 2001 INTERNATIONAL CONFERENCE ON IMAGE PROCESSING. ICIP 2001 - THESSALONIKI, GREECE, OCT. 7 - 10, 2001; [INTERNATIONAL CONFERENCE ON IMAGE PROCESSING], INSTITUTE OF ELECTRICAL AND ELECTRONICS ENGINEERS, NEW YORK, NY, 7 octobre 2001 (2001-10-07), page 1029, XP032396296, DOI: 10.1109/ICIP.2001.958672 ISBN: 978-0-7803-6725-8**

EP 2 920 889 B1

**Description**

La présente invention concerne une transmission de données vidéo sur un canal de transmission par courants porteurs en ligne.

Les systèmes audiovisuels installés notamment chez les particuliers reposent typiquement sur un ou plusieurs dispositifs sources de contenus audiovisuels et un ou plusieurs dispositifs récepteurs de contenus audiovisuels. De tels dispositifs sources sont par exemple des lecteurs Blu-Ray (marque déposée) ou des boîtiers décodeurs (« set-top box » en anglais). De tels dispositifs récepteurs sont par exemple des télévisions haute-définition HDTV (« High-Definition TeleVision » en anglais) ou des disques dur HDD (« Hard-Disk Drive » en anglais). Pour permettre le transfert des contenus audiovisuels et permettre un décodage en temps réel de ces contenus audiovisuels, les dispositifs sources sont typiquement reliés aux dispositifs récepteurs par des câbles dédiés, par exemple de type HDMI (« High-Definition Multimedia Interface » en anglais). Cela entraîne une multiplication des câbles pour ces systèmes audiovisuels, ce qui pose des problèmes d'encombrement et de complexité d'installation.

Une première approche pour supprimer ces câbles est de mettre en oeuvre un lien sans fil entre les dispositifs sources et les dispositifs récepteurs. De manière à transférer des contenus audiovisuels haute-définition, la technologie WirelessHD (marque déposée) a été développée. Cette technologie repose sur des transmissions de données dans une bande de fréquences autour de 60 GHz et permet d'atteindre des débits théoriques de l'ordre de 4 Gbps sur des distances de l'ordre de 10 mètres. Une telle distance est certes suffisante pour la mise en oeuvre de systèmes audiovisuels, mais l'utilisation d'une telle bande de fréquence a l'inconvénient d'être sensible au masquage, même si des techniques de formation de faisceau (« beamforming » en anglais) permettent de gagner en souplesse d'installation. En d'autres termes, si un obstacle se trouve physiquement sur le chemin de communication sans fil, la capacité de transfert de données se trouve grandement diminuée, voire inexistante.

Les dispositifs sources et récepteurs étant déjà connectés à un réseau électrique afin d'être alimentés en énergie électrique, une approche peut être de se servir du réseau électrique comme canal de transmission. Des technologies, comme par exemple les spécifications HomePlug (marque déposée) publiées par l'association HomePlug Powerline Alliance, permettent de transmettre des données en se servant du réseau électrique comme canal de transmission. Cependant, les débits théoriques autorisés par ces technologies reposant sur une modulation OFDM (« Orthogonal Frequency Division Multiplex » en anglais) sont de l'ordre de 500 Mbps sur un canal de transmission de type SISO (« Single Input Single Output » en anglais), voire 1 à 2 Gbps sur un canal de transmission de type MIMO (« Multiple Input Multiple Output » en anglais). Or, quand il s'agit de transporter des données vidéo Haute-Définition voire Ultra Haute Définition non compressées, les débits peuvent atteindre de 3 à 18 Gbps en HDMI dans la version 2.0 des spécifications. Pour transmettre ces données avec les technologies actuelles de transmission sur courants porteurs en ligne, une forte compression est donc nécessaire, ce qui nuit à la qualité finale des données vidéo présentées à l'utilisateur.

De plus, lorsqu'un même contenu audiovisuel doit être transmis à plusieurs dispositifs récepteurs disposant de résolutions différentes, les technologies actuelles de transmission sur courants porteurs en ligne nécessitent de transmettre autant de flux de données qu'il y a de résolutions à supporter. Cela implique de partager la bande passante sur le réseau électrique, ce qui amplifie les besoins de compression et dégrade d'autant plus la qualité finale des données vidéo présentées à l'utilisateur.

Il est souhaitable de pallier ces inconvénients de l'état de la technique. Il est notamment souhaitable de fournir une solution qui permette d'augmenter la qualité d'expérience QoE (« Quality of Experience » en anglais) dans le cadre de transmissions sur le réseau électrique. Il est en outre souhaitable de fournir une solution qui permette de mettre en oeuvre de telles transmissions, bien que des transmissions sur le réseau électrique soient en cours, par exemple selon la technologie HomePlug, en limitant les perturbations occasionnées à l'encontre de ces transmissions en cours.

On notera la publication de demande de brevet WO 2007/086080 A2 qui décrit un système de transmission de type UWB (« Ultra Wide Band » en anglais) dans lequel une transformation par ondelettes est appliquée afin d'obtenir des images de résolutions différentes et de limiter l'impact sur les autres communications, puisque la densité spectrale de puissance (PSD) du signal UWB reste au niveau du bruit pour les autres communications.

On notera aussi le document « Three-dimensional DCT/WT compression using motion vector segmentation for low nit-rate video coding », Gi Hun Lee et al, IEEE Procceedings / International Conference on Image Processing, vol. 3, pp. 456-459, 26-29 octobre 1997, qui décrit une détermination de changements de scènes sur la base d'histogrammes de luminance et qui propose aussi de définir les des groupes d'images GOPs (« Group Of Pictures » en anglais) en prenant en outre en compte des vecteurs de mouvement.

On notera aussi le document « Motion-compensated wavelet transform coding for color video compression », Ya-Qin Zhang et al, IEEE Transactions on Circuits and Systems for Video Technology, vol. 2, no. 3, pp. 285-296, 1er septembre 1992, qui décrit une approche mathématique de décomposition de vidéos en ondelettes, une utilisation de la représentation en ondelettes pour de l'interpolation et du sous-échantillonnage, une estimation / compensation de mouvement multi-résolution et une quantification.

On notera enfin le document « Motion-compensated highly scalable video compression using an adaptive 3D wavelet transform based on lifting », A. Secker et al, IEEE Proceedings / International Conference on Image Processing, pp. 1029-1032, 7 octobre 2001, qui décrit un cadre de travail dans le domaine des transformées par ondelettes à mouvement compensé, d'application à la compression de vidéo hautement extensible.

L'invention concerne un procédé de transmission de données vidéo sur un canal de transmission par courants porteurs en ligne, un premier dispositif de communication obtenant des données vidéo sous la forme d'une succession d'images non compressées. Le procédé est tel que le premier dispositif de communication effectue les étapes suivantes : décomposition par ondelettes de chaque image non compressée, la décomposition permettant d'obtenir des données de résolutions différentes ; compression de chaque image décomposée par ondelettes ; transmission, impulsionnelle et par étalement, de chaque image compressée à destination d'un second dispositif de communication, de manière à introduire une redondance de données dont le taux, pour chaque donnée de ladite image compressée, est défini en fonction de la résolution de ladite donnée vidéo, la redondance des données de plus basse résolution étant supérieure à celle des données de toute autre résolution. Le procédé est en outre tel que le premier dispositif effectue les étapes suivantes : découpage de la succession d'images non compressées en séquences d'images non compressées, par détection de changements de scènes sur la base de différences d'histogrammes de luminance entre deux images consécutives ; détermination de cartes de vitesse représentatives du déplacement des pixels d'une image non compressée à une image non compressée suivante dans une même séquence d'images non compressées ; transmission des cartes de vitesse obtenues au second dispositif de communication pour permettre audit second dispositif de communication d'appliquer une opération d'amélioration d'image par interpolation inter-image pour au moins une séquence d'images reconstruites, sur la base desdites cartes de vitesse ; et détermination de la capacité du canal de transmission par courants porteurs en ligne et, mise en oeuvre de la compression de chaque image décomposée par ondelettes, en fonction de la capacité déterminée du canal de transmission par courants porteurs en ligne. De plus, pour déterminer les cartes de vitesse, le premier dispositif de communication applique un algorithme de somme des différences absolues à chaque sous-bande de chaque niveau de résolution, et détermine une carte de vitesse, pour chaque niveau de résolution, à partir des résultats d'application de l'algorithme de somme des différences absolues à chaque sous-bande dudit niveau de résolution. Ainsi, grâce à la décomposition en ondelettes et à la compression adaptée à la capacité du canal de transmission par courants porteurs en ligne, en conjonction avec la transmission impulsionnelle par étalement défini en fonction de la résolution des données vidéo, la qualité d'expérience QoE est améliorée. De plus, la transmission impulsionnelle par étalement permet la coexistence sur le canal de transmission de transmissions basées sur des modulations OFDM, en limitant les perturbations occasionnées à l'encontre de ces transmissions. Enfin, la décomposition par ondelettes permet d'optimiser la consommation de bande passante, lorsque les données vidéo correspondent à un contenu qui doit être transmis à plusieurs dispositifs récepteurs disposant de résolutions différentes. De plus, la qualité des images reconstruites par le second dispositif se trouve améliorée grâce à la prise en compte de l'ensemble des sous-bandes dudit niveau de résolution.

Selon un mode de réalisation particulier, le taux de redondance des données de chaque image compressée est supérieur au taux de redondance des données, de ladite image compressée, de toute autre résolution supérieure. Ainsi, plus la résolution est basse dans la décomposition en ondelettes, plus la robustesse de transmission est élevée.

Selon un mode de réalisation particulier, le second dispositif de communication effectue les étapes suivantes : reconstruction d'images non compressées à partir de données reçues du premier dispositif de communication via le canal de transmission par courants porteurs en ligne ; obtention d'un découpage en séquences des images reconstruites ; application d'une opération d'amélioration d'image par interpolation inter-image pour au moins une séquence d'images reconstruites, sur la base desdites cartes de vitesse. Ainsi, la qualité d'expérience QoE est encore améliorée.

Selon un mode de réalisation particulier, la décomposition en ondelettes est une décomposition en ondelettes de seconde génération, et dans l'opération d'amélioration d'image pour ladite séquence d'images reconstruites, le second dispositif de communication applique un filtre temporel d'ordre 2 sur les composantes à deux dimensions des ondelettes. Ainsi, la qualité d'expérience QoE est encore améliorée.

Selon un mode de réalisation particulier, le premier dispositif de communication effectue les étapes suivantes : détermination pour chaque pixel de chaque image non compressée d'une première valeur de contraste par rapport à des pixels voisins ; transmission au second dispositif de communication des premières valeurs de contraste déterminées. En outre, le second dispositif de communication effectue les étapes suivantes : détermination pour chaque pixel de chaque image reconstruite d'une seconde valeur de contraste par rapport à des pixels voisins ; comparaison des secondes valeurs de contraste avec les premières valeurs de contraste ; décision d'appliquer ou pas l'opération d'amélioration d'image, en fonction de ladite comparaison. Ainsi, l'utilisation de ressources de traitement par le second dispositif de communication est améliorée.

Selon un mode de réalisation particulier, pour déterminer les cartes de vitesse, le premier dispositif de communication effectue les étapes suivantes : détermination de vecteurs de mouvement pour un premier niveau de résolution ; et, détermination de zones de recherche pour application d'un algorithme de correspondance de macroblocks dans un second niveau de résolution d'ordre supérieur audit premier niveau de résolution, en appliquant une marge autour des vecteurs de mouvement déterminés pour ledit premier niveau de résolution. Ainsi, la détermination des cartes de vitesse est de complexité réduite.

Selon un mode de réalisation particulier, pour chaque niveau de résolution, des coefficients de pondération sont appliqués sur les résultats de l'algorithme de somme des différences absolues appliqué à chaque sous-bande dudit niveau de résolution, lesdits coefficients de pondération étant définis de manière à minimiser une métrique de distorsion résiduelle sous une contrainte de débit autorisé par la capacité du canal de transmission par courants porteurs en ligne. Ainsi, le meilleur compromis débit / distorsion peut être trouvé.

Selon un mode de réalisation particulier, lorsque, dans les cartes de vitesse, un vecteur de mouvement est tel que le minimum entre les valeurs absolues des composantes dudit vecteur de mouvement est supérieur à un premier seuil prédéfini, le premier dispositif considère que ledit vecteur de mouvement est égal à un vecteur de mouvement associé à une compensation de mouvement caméra. Ainsi, la signalisation des cartes de vitesse peut être réduite, en ne tenant pas compte d'aberrations qui pourraient résulter de l'algorithme de somme des différences absolues.

Selon un mode de réalisation particulier, lorsque, dans les cartes de vitesse, un vecteur de mouvement est tel que la somme des valeurs absolues des composantes dudit vecteur de mouvement est inférieure à un second seuil prédéfini, le premier dispositif considère que ledit vecteur de mouvement est égal à un vecteur de mouvement associé à une compensation de mouvement caméra. Ainsi, la signalisation des cartes de vitesse peut être réduite.

Selon un mode de réalisation particulier, le premier dispositif encode les cartes de vitesse de manière différentielle par rapport au vecteur de mouvement associé à la compensation de mouvement caméra. Ainsi, les ressources de canal de transmission nécessaires à l'envoi des cartes de vitesse sont réduites.

Selon un mode de réalisation particulier, la décomposition par ondelettes et la compression effectuées par le premier dispositif de communication reposent sur une chaîne d'encodage de type JPEG2000.

Selon un mode de réalisation particulier, la transmission, impulsionnelle et par étalement effectuée par le premier dispositif de communication repose sur une chaîne de transmission de type I-UWB.

Selon un mode de réalisation particulier, la chaîne de transmission de type I-UWB comporte un encodeur de type LDPC afin d'introduire ladite redondance de données.

L'invention concerne également un système de transmission de données vidéo sur un canal de transmission par courants porteurs en ligne, ledit système comportant au moins un premier dispositif de communication comportant des moyens d'obtention de données vidéo sous la forme d'une succession d'images non compressées. Le système est tel que le premier dispositif de communication comporte en outre : des moyens de décomposition par ondelettes de chaque image non compressée, permettant d'obtenir des données de résolutions différentes ; des moyens de compression de chaque image décomposée par ondelettes ; des moyens de transmission, impulsionnelle et par étalement, de chaque image compressée, de manière à introduire une redondance de données dont le taux, pour chaque donnée de ladite image compressée, est défini en fonction de la résolution de ladite donnée vidéo, la redondance des données de plus basse résolution étant supérieure à celle des données de toute autre résolution. Le système est en outre tel que le premier dispositif comporte : des moyens de découpage de la succession d'images non compressées en séquences d'images non compressées, par détection de changements de scènes sur la base de différences d'histogrammes de luminance entre deux images consécutives ; des moyens de détermination de cartes de vitesse représentatives du déplacement des pixels d'une image non compressée à une image non compressée suivante dans une même séquence d'images non compressées ; des moyens de transmission des cartes de vitesse obtenues au second dispositif de communication pour permettre audit second dispositif de communication d'appliquer une opération d'amélioration d'image par interpolation inter-image pour au moins une séquence d'images reconstruites, sur la base desdites cartes de vitesse ; et des moyens de détermination de la capacité du canal de transmission par courants porteurs en ligne et, de mise en oeuvre de la compression de chaque image décomposée par ondelettes, en fonction de la capacité déterminée du canal de transmission par courants porteurs en ligne. De plus, pour déterminer les cartes de vitesse, le premier dispositif de communication comporte des moyens d'application d'un algorithme de somme des différences absolues à chaque sous-bande de chaque niveau de résolution, et de détermination d'une carte de vitesse, pour chaque niveau de résolution, à partir des résultats d'application de l'algorithme de somme des différences absolues à chaque sous-bande dudit niveau de résolution.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

- la Fig. 1A illustre schématiquement un système dans lequel l'invention peut être mise en oeuvre ;
- la Fig. 1B illustre schématiquement un exemple d'architecture matérielle d'un dispositif de communication du système de la Fig. 1 ;
- la Fig. 2 illustre schématiquement un algorithme de transmission de données vidéo selon la présente invention ;
- la Fig. 3 illustre schématiquement une décomposition par ondelettes ;
- la Fig. 4A illustre schématiquement une chaîne d'encodage JPEG2000 ;

- la Fig. 4B illustre schématiquement une chaîne de décodage JPEG2000 ;
- la Fig. 5A illustre schématiquement une chaîne d'émission I-UWB ;
- la Fig. 5B illustre schématiquement une chaîne de réception I-UWB ;
- la Fig. 6 illustre schématiquement un algorithme d'émission de données vidéo, basé sur la chaîne d'encodage JPEG2000 et la chaîne d'émission I-UWB ;
- la Fig. 7 illustre schématiquement un algorithme de réception de données vidéo, basé sur la chaîne de décodage JPEG2000 et la chaîne de réception I-UWB.

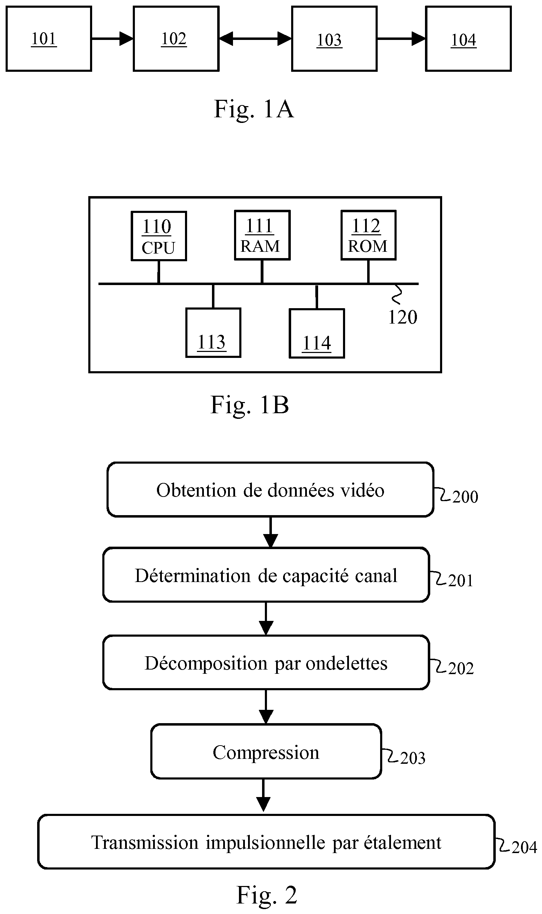

La Fig. 1A illustre schématiquement un système dans lequel l'invention peut être mise en oeuvre. Le système de la Fig. 1A comporte un dispositif source de données vidéo 101. Les données vidéo sont fournies par le dispositif source 101 sous la forme d'une succession d'images non compressées. Le système de la Fig. 1A comporte aussi un dispositif récepteur de données vidéo 104, destiné à recevoir les données vidéo fournies par le dispositif source 101.

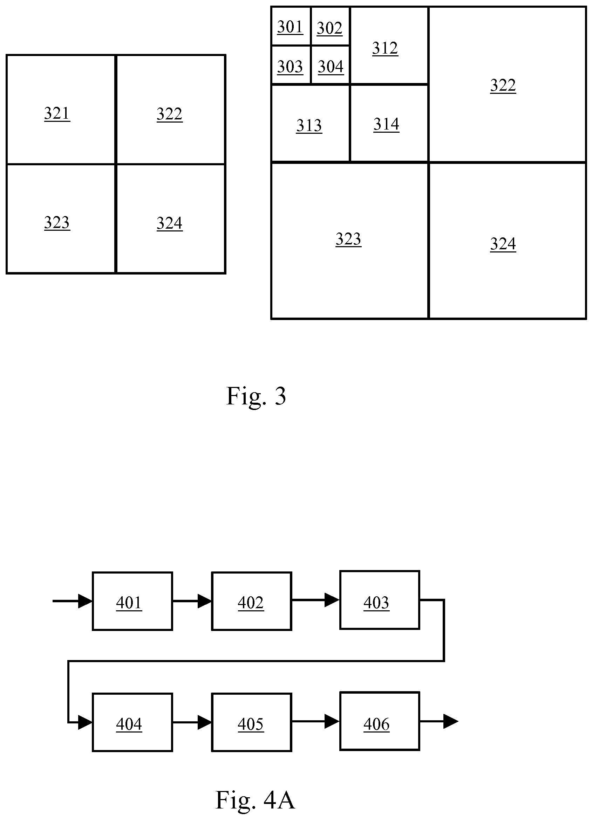

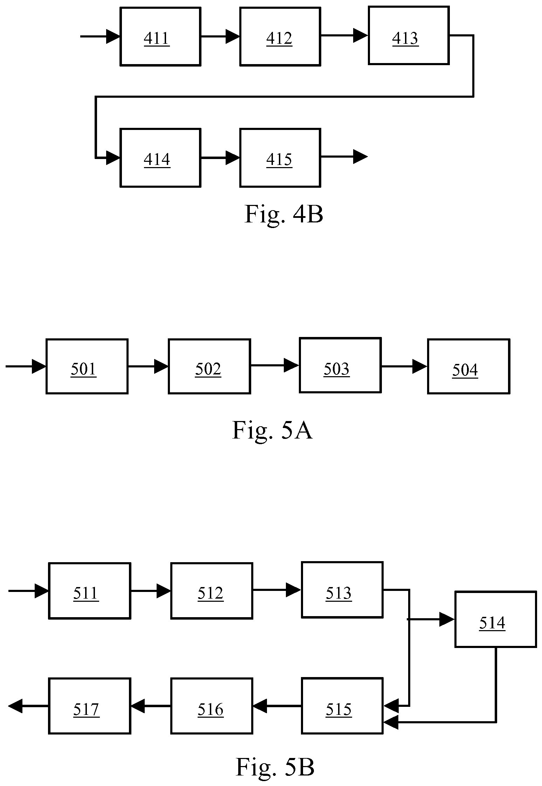

Pour permettre au dispositif récepteur 104 de recevoir les données fournies par le dispositif source 101, le système de la Fig. 1A comporte en outre deux dispositifs de communication 102, 103, adaptés pour mettre en oeuvre des communications sur courants porteurs en ligne (« Powerline communications » en anglais), tel que décrit ci-après en relation avec les Figs. 5A et 5B. Une portion de ligne électrique sépare donc les dispositifs de communication 102, 103 et fournit un canal de transmission par courants porteurs en ligne. Les dispositifs de communication 102, 103, sont en outre adaptés pour mettre en oeuvre une décomposition par ondelettes des données vidéo fournies par le dispositif source 101, tel que décrit ci-après en relation avec les Figs. 3, 4A et 4B.

Le dispositif source 101 est connecté au dispositif de communication 102 via un lien adapté pour une transmission de données sous forme de successions d'images non compressées. De même, le dispositif récepteur 104 est connecté au dispositif de communication 103 via un lien adapté pour une transmission de données sous forme de successions d'images non compressées. Par exemple, des liens de type HDMI peuvent être mis en oeuvre. Dans une variante de réalisation, le dispositif source 101 et le dispositif de communication 102 d'un côté, et le dispositif récepteur 104 et le dispositif de communication 103 d'un autre côté, peuvent être mis respectivement en oeuvre dans un même boîtier, voire sur un même circuit imprimé (« Printed Circuit Board » en anglais), lesdits liens étant alors des pistes desdits circuits imprimés.

La Fig. 1B illustre schématiquement un exemple d'architecture matérielle des dispositifs de communications 102, 103. Chaque dispositif de communication 102, 103 comporte alors, reliés par un bus de communication 120 : un processeur ou CPU (« Central Processing Unit » en anglais) 110 ; une mémoire vive RAM (« Random Access Memory » en anglais) 111 ; une mémoire morte ROM (« Read Only Memory » en anglais) 112; une unité de stockage ou un lecteur de support de stockage, tel qu'un lecteur de cartes SD (« Secure Digital » en anglais) 113 ; une première interface 114 permettant de communiquer avec le dispositif source 101 ou le dispositif récepteur 104 ; et une seconde interface 115 permettant de mettre en oeuvre les communications par courants porteurs en ligne.

Le processeur 110 est capable d'exécuter des instructions chargées dans la RAM 111 à partir de la ROM 112, d'une mémoire externe (non représentée), d'un support de stockage, ou d'un réseau de communication. Lorsque le dispositif de communication 102, 103 est mis sous tension, le processeur 110 est capable de lire de la RAM 111 des instructions et de les exécuter. Ces instructions forment un programme d'ordinateur causant la mise en oeuvre, par le processeur 110, de tout ou partie des chaînes de traitement, algorithmes et étapes décrits ci-après. Tout ou partie des chaînes de traitement, algorithmes et étapes décrits ci-après peut être implémenté sous forme logicielle par exécution d'un ensemble d'instructions par une machine programmable, tel qu'un DSP (« Digital Signal Processor » en anglais) ou un microcontrôleur, ou être implémenté sous forme matérielle par une machine ou un composant dédié, tel qu'un FPGA (« Field-Programmable Gate Array » en anglais) ou un ASIC (« Application-Specific Integrated Circuit » en anglais).

La Fig. 2 illustre schématiquement un algorithme de transmission de données vidéo selon la présente invention.

Dans une étape 200, le dispositif de communication 102 obtient des données vidéo fournies par le dispositif source 101 sous la forme d'une succession d'images non compressées.

Dans une étape 201 suivante, le dispositif de communication 102 détermine la capacité du canal de transmission par courants porteurs en ligne.

Dans une étape 202 suivante, le dispositif de communication 102 effectue une décomposition par ondelettes (« wavelets » en anglais) desdites images. La décomposition par ondelettes est décrite ci-après en relation avec la Fig. 3. Procéder à une décomposition par ondelettes permet d'obtenir des données représentatives de différents niveaux de résolutions. Ainsi, un même flux de données correspondant à des images décomposées par ondelettes peut être transmis à plusieurs dispositifs récepteurs disposant de résolutions respectives différentes. La gestion de la bande passante de transmission est donc améliorée. De plus, lorsqu'on considère les dispositifs sources actuels, ceux-ci procèdent typiquement à une décompression de données vidéo selon le format H.264, comme c'est le cas par exemple de lecteurs Blu-Ray (marque déposée) ou de décodeurs DVB-T (« Digital Video Broadcasting - Terrestrial » en anglais). Une telle décompression entraîne une perte de qualité par introduction d'artéfacts. Si le dispositif de communication 102 avait utilisé une compression selon le format H.264, cela aurait eu pour conséquence d'amplifier ces artéfacts au niveau du dispositif récepteur 104.

Dans une étape 203 suivante, le dispositif de communication 102 effectue une compression de chaque image décomposée par ondelettes, en fonction de la capacité déterminée du canal de transmission par courants porteurs en ligne.

Dans une étape 204 suivante, le dispositif de communication 102 effectue une transmission, impulsionnelle et par étalement, de chaque image compressée. L'étalement appliqué est défini en fonction du niveau dans la décomposition par ondelettes de chaque sous-bande considérée. Chaque sous-bande correspondant à une résolution inférieure à celle d'une autre sous-bande se voit appliquer un étalement plus robuste que ladite autre sous-bande. Ainsi, les sous-bandes de plus basse résolution bénéficient de l'étalement le plus robuste, ce qui vise à assurer que le dispositif récepteur 104 puisse tout de même afficher des données vidéo en cas d'interférences sur le canal de transmission, quitte à ce que ces données vidéo soient de qualité inférieure à la résolution du dispositif récepteur 104. Cela vise aussi à assurer que, lorsque plusieurs dispositifs récepteurs disposant de résolutions différentes reçoivent le flux de données vidéo, chacun de ces dispositifs puisse afficher des données vidéo. En outre, la transmission impulsionnelle et par étalement, sur une distance maximale de 10 mètres, sera considérée comme du bruit blanc par un démodulateur OFDM.

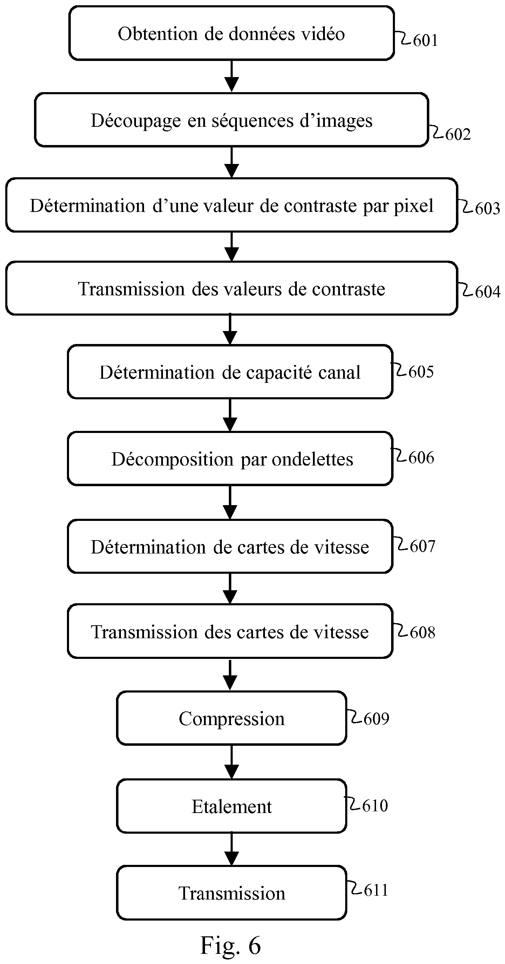

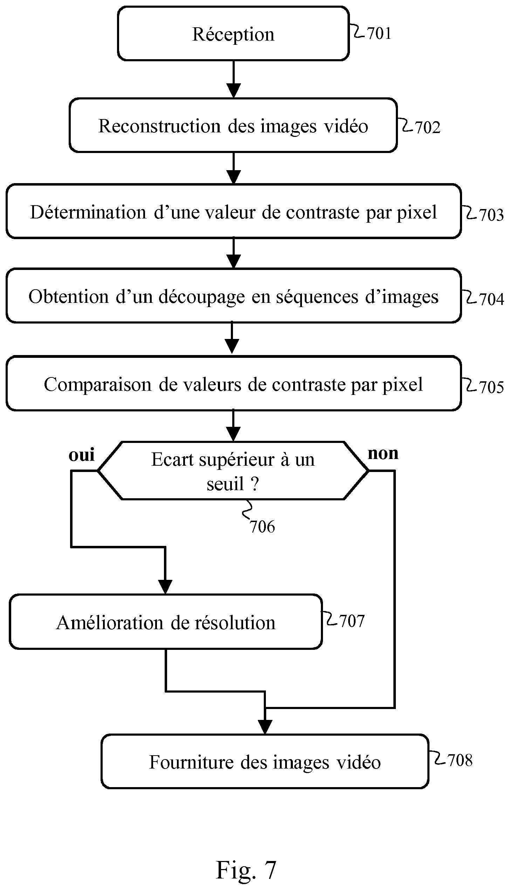

Un mode de réalisation utilisant une décomposition par ondelettes selon la norme JPEG2000, telle que définie dans le standard ISO/IEC 15444, et une transmission impulsionnelle selon une bande ultra-large UWB (« Ultra Wide Band » en anglais) est décrit ci-après en relation avec les Figs. 6 et 7.

La Fig. 3 illustre schématiquement une décomposition par ondelettes. Est considéré le cas illustratif d'une décomposition discrète à trois niveaux d'une image en sous-bandes, entraînant une génération de dix sous-bandes.

La décomposition consiste à filtrer le signal d'une image selon deux directions, en sous-bandes de basses fréquences et de hautes fréquences spatiales. Le filtrage s'applique par passes successives pour décomposer le signal de l'image en sous-bandes selon plusieurs niveaux de résolution (ici trois).

Un premier filtrage est effectué selon une première direction (par exemple horizontale), au moyen d'un filtre passe-bande ou d'une combinaison d'un filtre passe-bas et d'un filtre passe-haut. Après passage dans des décimateurs par deux, les signaux filtrés résultants sont à leur tour filtrés selon une seconde direction (par exemple verticale). Chaque signal résultant est à nouveau passé dans un décimateur par deux. Quatre sous-bandes 321, 322, 323, 324 sont alors obtenues et correspondent au niveau de résolution le plus élevé dans la décomposition. Le résultat de cette première passe de décomposition est représenté sur la partie gauche de la Fig. 3. La sous-bande 321 comporte les composantes de basses fréquences selon les deux directions du signal d'image. La sous-bande 321 résultant d'une passe de décomposition par ondelettes est notée *sous-bande PB.* La sous-bande 322 comporte les composantes de basses fréquences selon une première direction et de hautes fréquences selon une seconde direction du signal image. La sous-bande 322 résultant d'une passe de décomposition par ondelettes est notée *sous-bande V.* La sous-bande 323 comporte les composantes de hautes fréquences selon la première direction et les composantes de basses fréquences selon la seconde direction. La sous-bande 323 résultant d'une passe de décomposition par ondelettes est notée *sous-bande H.* Enfin, la sous-bande 324 comporte les composantes de hautes fréquences selon les deux directions. La sous-bande 321 résultant d'une passe de décomposition par ondelettes est notée *sous-bande D.*

Une deuxième passe est effectuée sur la sous-bande 321, pour fournir de la même manière quatre sous-bandes de niveau de résolution intermédiaire dans la décomposition.

Une troisième passe est enfin effectuée sur la sous-bande comportant les composantes de basses fréquences selon les deux directions du signal d'image de cette résolution intermédiaire, pour fournir de la même manière quatre sous-bandes de niveau de résolution le plus faible dans la décomposition. Le résultat de cette première passe de décomposition est représenté sur la partie droite de la Fig. 3. Les sous-bandes 312, 313, 314 résultent de la seconde passe et les sous-bandes 301, 302, 303, 304 résultent de la troisième passe. La sous-bande 301 comporte donc les composantes de basses fréquences selon les deux directions du signal d'image de la résolution la plus faible dans la décomposition.

La Fig. 4A illustre schématiquement une chaîne d'encodage JPEG2000.

Les données vidéo, sous forme d'une succession d'images non compressées, sont d'abord injectées dans une unité de traitement préliminaire 401. Ce traitement préliminaire peut consister à transformer les valeurs des pixels de chaque image non compressée en valeurs signées. Ce traitement préliminaire peut aussi consister à passer d'un espace couleur RVB (RGB en anglais) à un espace couleur YUV plus adapté à une compression de données, les trois composantes YUV étant moins corrélées.

Les données vidéo traitées sont ensuite injectées dans une unité de transformée en ondelettes 402, dont le principe a été décrit ci-dessus en relation avec la Fig. 3. Les ondelettes de Daubechies sont préférentiellement utilisées pour leur performance accrue.

Les données vidéo résultant de la transformée en ondelettes sont ensuite injectées dans une unité de quantification 403 reposant sur un quantificateur scalaire uniforme à zone morte, les coefficients résultant de la transformée en ondelettes inférieurs à un seuil prédéterminé étant ramenés à zéro.

Les données vidéo quantifiées sont ensuite injectées dans une unité de codage entropique 404. Les données vidéo sont ensuite injectées dans une unité d'allocation de débits 405 permettant que les données vidéo issues de l'encodage entropique soient mises sous forme de paquets, chaque paquet correspondant à une couche d'un niveau de résolution d'une composante de l'image.

Les données vidéo sous forme de paquets sont ensuite injectées dans une unité d'organisation de trames 406, ordonnançant les paquets les uns par rapport aux autres.

La Fig. 4B illustre schématiquement une chaîne de décodage JPEG2000, qui vise à effectuer les opérations inverses de la chaîne d'encodage JPEG2000 présentée ci-dessus en relation avec la Fig. 4A.

Les données vidéo sous forme de paquets, tels que générés par l'unité d'organisation de trames 406, sont injectées dans une unité de décodage d'entêtes de paquets et d'analyse grammaticale (« parsing » en anglais) des paquets.

Les données vidéo extraites des paquets sont ensuite injectées dans une unité de décodage entropique 412, effectuant les opérations inverses de l'unité de codage entropique 404. Les données vidéo résultant du décodage entropique sont ensuite injectées dans une unité de quantification inverse 413, puis dans une unité de transformée en ondelettes inverse 414, effectuant les opérations inverses respectivement des unités de quantification 403 et de transformée en ondelettes 402.

Les données vidéo résultant de la transformée en ondelettes inverse sont ensuite injectées dans une unité de post-traitement 415 effectuant les opérations inverses de l'unité de traitement préliminaire 401.

La Fig. 5A illustre schématiquement une chaîne d'émission I-UWB (« Impulse UWB » en anglais) mise en oeuvre dans le cadre d'une transmission de données vidéo.

Les données vidéo, prêtes à être transmises, sont injectées dans une unité de codage canal 501 par étalement introduisant de la redondance sur les données vidéo injectées. Le taux de redondance pour chaque donnée vidéo est défini en fonction du niveau de décomposition, *i.e.* la résolution, auquel appartient ladite donnée vidéo. Un plus grand taux de redondance est appliqué aux données vidéo de plus basse résolution.

Le codage canal appliqué est préférentiellement de type LDPC (« Low Density Parity Check » en anglais), multipliant ainsi les données vidéo par des matrices binaires, la redondance introduite permettant de détecter et de corriger des erreurs dues au canal de transmission par courants porteurs en ligne affecté par des bruits impulsionnels. Utiliser un codage canal de type LDPC est peu consommateur en énergie comparativement à d'autres systèmes de type FEC (« Forward Error Correction » en anglais), par exemple de type Viterbi ou Reed-Solomon.

Les données vidéo résultant du codage canal sont ensuite injectées dans une unité d'entrelacement de bits (« bit interleaver » en anglais) 502, afin d'améliorer l'uniformité de la distribution des erreurs dues au canal de transmission par courants porteurs en ligne.

Les données vidéo entrelacées sont ensuite injectées dans une unité de modulation par impulsion 503. Préférentiellement, l'unité de modulation par impulsion 503 met en oeuvre un étalement en séquence directe de type DS-UWB (« Direct Sequence UWB » en anglais). On pourra se référer au document « Performance Evaluation and Comparison of Different Modulation Schemes for UWB Multiaccess Systems », Durisi et Benedetto, IEEE International Conference on Communications, May 2003*, où les performances de différents types de modulation UWB sont évaluées et comparées.

A chaque mot de code, représentant une donnée vidéo injectée, une forme d'impulsion électrique est associée. Une porteuse à 4 GHz est préférentiellement utilisée avec un schéma de codage en quadrature de phase QPSK (« Quadrature Phase-Shift Keying » en anglais).

Les impulsions électriques sont alors injectées dans une unité de couplage capacitif 504 permettant l'injection de ces impulsions électriques sur la portion de ligne électrique entre les dispositifs de communication 102, 103.

La Fig. 5B illustre schématiquement une chaîne de réception I-UWB, qui vise à effectuer les opérations inverses de la chaîne d'émission I-UWB présentée ci-dessus en relation avec la Fig. 5A.

Un signal électrique en provenance de la portion de ligne électrique entre les dispositifs de communication 102, 103 est obtenu via une unité de couplage capacitif 511, permettant d'en éliminer les composantes basses-fréquences relatives au signal alternatif d'alimentation transitant sur le réseau électrique.

Le signal électrique obtenu est ensuite injecté dans un filtre 512, dit AFE (« Analog Front End » en anglais), permettant d'obtenir un signal électrique filtré correspondant à la transmission par courants porteurs en ligne. Le signal électrique filtré est ensuite injecté dans une unité d'échantillonnage 513.

Les échantillons obtenus sont ensuite injectés dans une unité de synchronisation de trames et d'estimation de canal 514 permettant d'effectuer une égalisation canal via un filtre numérique adapté 515 (« digital matched filter » en anglais) en fonction de la forme des impulsions attendues. L'ensemble formé par les unités 514, 515 permet d'effectuer l'opération inverse de l'unité de modulation par impulsion 503.

Les échantillons filtrés sont ensuite injectés dans une unité de dés-entrelacement de bits 516, effectuant l'opération inverse de l'unité d'entrelacement de bits 502.

Les échantillons désentrelacés sont ensuite injectés dans une unité de décodage canal 517 effectuant l'opération inverse de l'unité de codage canal 501.

La Fig. 6 illustre schématiquement un algorithme d'émission de données vidéo, basé sur la chaîne d'encodage JPEG2000 présentée en relation avec la Fig. 4A et la chaîne d'émission I-UWB présentée en relation avec la Fig. 5A.

Dans une étape 601, le dispositif de communication 102 obtient des données vidéo sous la forme d'une succession d'images non compressées.

Dans une étape 602 suivante, le dispositif de communication 102 effectue un découpage en séquences d'images. On dit aussi que le dispositif de communication 102 forme des groupes d'images GOPs (« Group Of Pictures » en anglais). Ce découpage en séquences est effectué par détection de changements de scènes, basée sur une comparaison d'histogrammes de luminance d'images consécutives. Entre deux images consécutives, le dispositif de communication 102 détermine un histogramme de luminance pour chacune desdites images consécutives. Le dispositif de communication 102 détermine ensuite, pour chaque valeur de luminance, une différence d'histogramme entre les images consécutives. Le dispositif de communication 102 détermine alors une norme euclidienne de ces différences de luminance. Si cette norme euclidienne est supérieure à un seuil prédéfini S, alors le dispositif de communication 102 considère que lesdites images consécutives appartiennent à un même groupe d'images GOP ; sinon, le dispositif de communication 102 considère que lesdites images consécutives n'appartiennent pas à un même group d'images GOP. L'utilisation de la norme euclidienne permet de masquer des variations de luminance liées à des mouvements au sein d'une même scène.

Dans une étape 603 suivante, le dispositif de communication 102 détermine pour chaque pixel de chaque image une valeur de contraste C par rapport à ses pixels voisins. Pour chaque image, le dispositif de communication 102 détermine la moyenne des valeurs de contraste des pixels constituant l'image.

Dans une étape 604 suivante, le dispositif de communication 102 transmet les valeurs de contraste C déterminées au dispositif de communication 103.

Dans une étape 605 suivante, le dispositif de communication 102 détermine la capacité *Cap* du canal de transmission par courants porteurs en ligne, comme suit :

$$Cap = \sum_i B_i \, log_2 \left( 1 + \frac{S(f_i)}{N(f_i)} \right)$$

où $B_i$ représente une largeur de bande fréquentielle occupée par chaque porteuse $i$ de la transmission I-UWB, et où $S(f_i)/N(f_i)$ représente un rapport signal à bruit du canal de transmission pour une fréquence de porteuse $f_i$. L'information $S(f_i)/N(f_i)$ peut être obtenue par le dispositif de communication 102 par voie de retour en provenance du dispositif de communication 103, suite à des mesures de rapport signal à bruit effectuées par le dispositif de communication 103.

Le dispositif de communication 102 en déduit un débit théorique D utilisable sur le canal de transmission grâce au critère de Nyquist, comme suit :

$$D = \sum_i B_i \, log_2(V_i)$$

où $V_i$ représente la valence, correspondant à une information d'efficacité de la modulation I-UWB en fonction du rapport signal à bruit $S(f_i)/N(f_i)$.

Le dispositif de communication 102 peut prendre une marge, par exemple de 3 dB, par rapport au débit théorique D.

Dans une étape 606 suivante, le dispositif de communication 102 effectue une décomposition par ondelettes pour chaque image, tel que décrit précédemment en relation avec la Fig. 3.

Une décomposition en ondelettes de seconde génération peut être mise en oeuvre. Cette opération est appelée *élévation* (« lifting » en anglais), et s'apparente à un traitement d'interpolation spatiale qui s'effectue de façon séparable, c'est-à-dire en horizontal puis en vertical, et qui exploite les filtres liés aux ondelettes, et le fait que l'image est décomposée en niveaux de résolution pour réaliser une interpolation d'ordre 2. Dans son principe de base, un schéma d'élévation appliqué à un signal 1D, peut être décomposé en trois parties. Tout d'abord, une transformée polyphase est effectuée permettant de séparer le signal en deux sous-ensembles disjoints formés respectivement d'échantillons d'indices pairs et d'indices impairs. Ensuite, une prédiction suivie d'une opération de mise à jour sont appliquées afin de générer un signal de détails et un signal d'approximation. Généralement, cette approche 1D est étendue au cas 2D de manière séparable : à chaque niveau de résolution, l'opération d'élévation s'applique aux lignes puis aux colonnes, ou vice-versa, conduisant ainsi à une sous-bande d'approximation et à trois sous-bandes de coefficients de détails orientés horizontalement, verticalement et diagonalement. On pourra se référer aux travaux de Wim Sweldens décrits dans le document « The Lifting Scheme: A Construction of Second Generation Wavelets », Society for Industrial and Applied Mathematics (SIAM), SIAM Journal on Mathematical Analysis, Volume 29 Issue 2, 1997, pages 511-546.

Dans une étape 607 suivante, le dispositif de communication 102 détermine des cartes de vitesse, sur la base des groupes d'images GOPs déterminés à l'étape 602. Ces cartes de vitesse sont représentatives du déplacement des pixels d'une image à une image suivante dans une même séquence d'images.

Pour ce faire, le dispositif de communication 102 prend la première image d'un groupe d'images GOP comme image de référence (souvent dénommée « keyframe » en anglais). Le dispositif de communication 102 découpe alors l'image de référence en carrés, appelés « macroblocks ». Le dispositif de communication 102 effectue alors une estimation de mouvement à l'intérieur de chacun de ces macroblocks, en appliquant un principe de compensation de mouvement par blocs (« Block Motion Compensation » en anglais). Pour chaque image suivant l'image de référence dans le groupe d'images GOP, le dispositif de communication 102 détermine une prédiction de blocs représentée par des vecteurs de mouvement (« motion vector » en anglais), en utilisant un principe de différence de fenêtres d'images décalées (« shifted » en anglais). L'ensemble de ces vecteurs de mouvement pour chaque image suivant l'image de référence dans le groupe d'images GOP forme une carte de vitesse. Une précision inférieure au pixel peut être obtenue par interpolation de manière à générer des cartes de vitesse sub-pixeliques, en affinant le résultat de la différence de fenêtres d'images décalées par résolution de l'équation du flot optique. En d'autres termes, le dispositif de communication 102 effectue une interpolation en considérant que l'intensité lumineuse d'un point d'image, ou sa couleur, est conservée au cours de son déplacement d'une image à une autre image du groupe d'images GOP.

Dans une variante de réalisation, le dispositif de communication 102 prend la première image d'un groupe d'images GOP comme image de référence et une image suivante. Pour obtenir une estimation des vecteurs de mouvement applicables pour différents niveaux de résolution, le dispositif de communication 102 obtient chacune desdites images selon différents niveaux de résolution, ces niveaux de résolution étant les mêmes que ceux représentés par décomposition par ondelettes, tel que décrit précédemment en relation avec la Fig. 3. Le dispositif de communication 102 peut obtenir ces images selon différents niveaux de résolution en partant desdites images et en supprimant de manière substantiellement équirépartie des pixels desdites images. Le dispositif de communication 102 effectue alors une analyse comparative desdites images par niveau de résolution. Le dispositif de communication 102 découpe alors en carrés, appelés « macroblocks », l'image de référence dans le niveau de résolution le plus faible.

Le dispositif de communication 102 recherche alors, préférentiellement grâce à un algorithme de somme des différences absolues SAD (« Sum of Absolute Differences » en anglais), dans l'image suivante dans le niveau de résolution le plus faible et dans la sous-bande PB, un macroblock similaire (« matching macroblock » en anglais) pour chaque macroblock de l'image de référence. Le dispositif de communication 102 détermine ainsi des vecteurs de mouvements pour permettre de reconstituer l'image suivante à partir de l'image de référence, pour le niveau de résolution le plus faible. Une approche classique consisterait à appliquer le même processus pour chaque niveau de résolution. Il est avantageusement proposé de réutiliser les vecteurs de mouvement déterminés pour le niveau de résolution le plus faible pour déterminer les vecteurs de mouvement pour au moins un niveau de résolution supérieur. Le dispositif de communication 102 découpe alors en macroblocks l'image de référence dans un niveau de résolution supérieur au niveau de résolution le plus faible. Le dispositif de communication 102 détermine ensuite pour chaque macroblock une zone de recherche restreinte dans l'image suivante, dans le même niveau de résolution et dans la sous-bande PB, à partir du vecteur de mouvement déterminé pour ledit macroblock dans le niveau de résolution le plus faible. Le dispositif de communication 102 détermine la zone de recherche restreinte en appliquant une marge autour du vecteur de mouvement appliqué à partir de la position dudit macroblock. Ladite marge est préférentiellement paramétrable et peut être fixée par des tests en laboratoire ou sur site. La découverte dudit macroblock similaire est alors obtenue plus rapidement. Le principe décrit ci-dessus peut s'appliquer de manière successive en partant du niveau de résolution le plus faible jusqu'au niveau de résolution le plus élevé.

Dans un autre mode de réalisation particulier, le dispositif de communication 102 tire profit des images décomposées en ondelettes pour affiner cette carte de vitesse pour chaque niveau de résolution. Là où il est connu de procéder à une application d'un algorithme SAD sur chaque sous-bande de basses fréquences (e.g. les sous-bandes 301 et 321 sur la Fig. 3) pour effectuer une estimation de mouvement dans le cadre d'une décomposition par ondelettes d'une séquence d'images vidéo, il est ici proposé d'appliquer l'algorithme SAD à chaque sous-bande de chaque niveau de résolution, et de déterminer une carte de vitesse, pour chaque niveau de résolution, à partir des résultats d'application de l'algorithme SAD à chaque sous-bande dudit niveau de résolution. La qualité des images reconstruites par le dispositif de communication 103 se trouve améliorée grâce à la prise en compte de l'ensemble des sous-bandes dudit niveau de résolution.

Le dispositif de communication 102 recherche alors, grâce à l'algorithme SAD, dans l'image suivante dans le niveau de résolution le plus faible et dans la sous-bande PB, un macroblock similaire (« matching macroblock » en anglais) pour chaque macroblock de l'image de référence dans le même niveau de résolution et pour la même sous-bande. Pour chaque macroblock de l'image suivante dans le niveau de résolution le plus faible et dans la sous-bande PB, le dispositif de communication 102 obtient alors un résultat $SAD\_PB1(i,j)$, où $(i,j)$ représente la position du macroblock considéré. Le dispositif de communication 102 effectue de même pour chaque autre sous-bande V, H et D dans le niveau de résolution le plus faible et obtient alors respectivement, pour chaque macroblock de l'image suivante dans le niveau de résolution le plus faible, des résultats SAD_V1(i,j) SAD_H1(i,j) et SAD_D1(i,j). Le dispositif de communication 102 calcule alors un résultat final pour chaque position de macroblock de l'image suivante dans le niveau de résolution le plus faible, tel que : SAD1(*i,j*) = SAD_PB1(i,j) + α * SAD_V1(i,j) + β * SAD_H1(i,j) + γ * SAD_D1(i,j) où α, β et γ sont des coefficients de pondération supérieurs à 0 et inférieurs à 1.

En d'autres termes, le dispositif de communication 102 détermine une valeur, pour chaque position de macroblock de l'image suivante dans le niveau de résolution le plus faible, à partir du résultat de l'algorithme SAD appliqué à la sous-bande PB auquel s'ajoute une pondération des résultats de l'algorithme SAD appliqué aux sous-bandes V, H et D. Le dispositif de communication 102 effectue de même pour chaque résolution, en partant ainsi du niveau de résolution le plus faible jusqu'au niveau de résolution le plus élevé. Pour déterminer une zone de recherche restreinte, le dispositif de communication 102 peut appliquer le mécanisme précédemment décrit. Considérant à titre illustratif que la décomposition en ondelettes mène à trois niveaux de résolutions, le dispositif de communication 102 détermine les valeurs suivantes, les mêmes coefficients de pondération étant appliqués à chaque niveau de résolution :

$$SAD1(i,j) = SAD\_PB1(i,j) + \alpha * SAD\_V1(i,j) + \beta * SAD\_H1(i,j) + \gamma * SAD\_D1(i,j)$$

$$SAD2(i,j) = SAD\_PB2(i,j) + \alpha * SAD\_V2(i,j) + \beta * SAD\_H2(i,j) + \gamma * SAD\_D2(i,j)$$

$$SAD3(i,j) = SAD\_PB3(i,j) + \alpha * SAD\_V3(i,j) + \beta * SAD\_H3(i,j) + \gamma * SAD\_D3(i,j)$$

où les résultats SAD_V2(i,j), SAD_H2(i,j) et SAD_D2(i,j) sont obtenus pour le niveau de résolution intermédiaire et SAD_V3(i,j), SAD_H3(i,j) et SAD_D3(i,j) sont obtenus pour le niveau de résolution le plus élevé.

Le dispositif de communication 102 recherche alors, pour chaque macroblock de l'image de référence et pour chaque résolution Z (Z=1 ou 2 ou 3 dans l'exemple ci-dessus), la position (i,j) de macroblock dans l'image suivante qui minimise la valeur SAD'Z' ('Z'=1 ou 2 ou 3 dans l'exemple ci-dessus) concernée. Cela donne, pour chaque résolution et pour chaque macroblock de l'image de référence, un vecteur de mouvement pour atteindre la position (i,j) obtenue grâce à l'algorithme SAD appliqué audit niveau de résolution. La différence entre la position (i,j) ainsi obtenue pour ledit niveau de résolution et la position du macroblock correspondant dans l'image de référence est ainsi un vecteur de mouvement de composantes Vx et Vy.

Les cartes de vitesse, *i.e.* les vecteurs de mouvement contenus dans les cartes de vitesse, peuvent être ensuite encodées grâce à un encodage différentiel par rapport à une compensation de mouvement caméra, notée CC. La compensation de mouvement caméra CC correspond au vecteur de mouvement, dans l'image de référence au niveau de résolution le plus faible, qui correspond au résultat de l'algorithme SAD retenu le plus faible parmi les résultats de l'algorithme SAD retenus pour tous les macroblocks dudit niveau de résolution.

Les valeurs obtenues pour les composantes Vx et Vy peuvent mener à des aberrations, qui sont préférentiellement prises en compte de la manière suivante. Si les composantes Vx et Vy d'un vecteur de mouvement sont telles que le minimum entre la valeur absolue de la composante Vx et la valeur absolue de la composante Vy est supérieur à un seuil prédéfini S1, alors le dispositif de communication 102 considère être en présence d'une aberration et considère que ledit vecteur de mouvement est égal au vecteur de mouvement associé à la compensation de mouvement caméra CC. Le seuil prédéfini S1 peut être fixé par des tests en laboratoire ou sur site. Le dispositif de communication 102 peut alors simplifier la signalisation associée à ce vecteur de mouvement (mode « SKIP ») lorsque les cartes de vitesse sont encodées grâce à un encodage différentiel par rapport à la compensation de mouvement caméra CC, ce qui réduit la consommation de bande passante pour la transmission de ces données, puisque cet encodage différentiel mène alors à une valeur nulle. La valeur du seuil prédéfini S1 peut être adaptée en fonction de la compensation de mouvement caméra CC si les cartes de vitesse ne sont pas encodées grâce à un tel encodage différentiel.

De manière à encore réduire la consommation de bande passante pour la transmission de ces données, le dispositif de communication 102 peut considérer qu'un vecteur de mouvement est nul lorsque les composantes Vx et Vy dudit vecteur de mouvement après encodage différentiel par rapport à la compensation de mouvement caméra CC sont tels que la somme de la valeur absolue de la composante Vx et la valeur absolue de la composante Vy est inférieure à un seuil prédéfini S2, c'est-à-dire que dans ce cas le dispositif de communication 102 considère que ledit vecteur de mouvement est égal au vecteur de mouvement associé à la compensation de mouvement caméra CC. La valeur du seuil prédéfini S2 est fonction du niveau de résolution auquel appartient le macroblock auquel s'applique ledit vecteur de mouvement. Le seuil prédéfini S2 peut être fixé par des tests en laboratoire ou sur site. Le dispositif de communication 102 peut alors aussi simplifier la signalisation associée à ce vecteur de mouvement (mode « SKIP »). La valeur du seuil prédéfini S2 peut être adaptée en fonction de la compensation de mouvement caméra CC si les cartes de vitesse ne sont pas encodées grâce à un tel encodage différentiel.

Les coefficients de pondération α, β et γ peuvent être définis par des tests en laboratoire ou sur site, en fonction d'un compromis entre distorsion résiduelle après reconstruction des images par le dispositif de communication 103 et débit effectif sur la portion de ligne électrique qui sépare les dispositifs de communication 102 et 103. Pour obtenir un métrique de distorsion résiduelle, la méthode suivante peut être appliquée. Tout d'abord une distorsion résiduelle locale peut être déterminée pour chaque fenêtre d'un ensemble de fenêtre couvrant la totalité de l'image reconstruite en soustrayant chacune des valeurs de pixels de ladite image reconstruite à chacune des valeurs des mêmes pixels de l'image d'origine. Le métrique de distorsion résiduelle peut alors être obtenu en faisant la somme des distorsions résiduelles locales ainsi déterminées. Les coefficients de pondération α, β et γ peuvent alors être définis de manière à minimiser le métrique de distorsion résiduelle sous une contrainte de débit autorisé par la capacité du canal de transmission par courants porteurs en ligne.

Dans une étape 608 suivante, le dispositif de communication 102 transmet chaque carte de vitesse déterminée au dispositif de communication 103. Chaque carte de vitesse peut aussi être transmise conjointement avec les données vidéo dans une étape ultérieure 610 décrite ci-après.

Dans une étape 609 suivante, le dispositif de communication 102 effectue une compression des données vidéo, en fonction de la capacité de canal déterminée, de manière à ce que le volume des données vidéo compressées après étalement soit adapté au débit théorique *D* déterminé. Cette compression est effectuée par ajustement de l'opération de quantification.

Dans une étape 610 suivante, le dispositif de communication 102 procède à un étalement des données vidéo compressées de manière à introduire une redondance de données dont le taux, pour chaque donnée vidéo, est défini en fonction du niveau de décomposition, *i.e.* la résolution, auquel appartient ladite donnée vidéo. La robustesse de l'étalement appliqué aux données vidéo compressées correspondant à la plus basse résolution est supérieure à la robustesse de l'étalement appliqué aux données vidéo compressées correspondant à toute autre résolution. On utilise par exemple un code LDPC linéaire de type (8,4) pour encoder les données vidéo compressées de plus basse résolution, c'est-à-dire un code générant des ensembles de données de 8 bits à partir d'ensembles de données de 4 bits, et un code LDPC linéaire de type (2,1) pour encoder les données vidéo compressées de plus basse résolution, c'est-à-dire un code générant des ensembles de données de 2 bits à partir de données de 1 bit. Dans un mode de réalisation particulier, la robustesse de l'étalement appliqué aux données vidéo compressées correspondant à chaque résolution est supérieure à la robustesse de l'étalement appliqué aux données vidéo compressées correspondant à toute autre résolution supérieure.

Dans une étape 611 suivante, le dispositif de communication 102 transmet les données vidéo après étalement via le canal de transmission, à destination du dispositif de communication 103.

La Fig. 7 illustre schématiquement un algorithme de réception de données vidéo, basé sur la chaîne de décodage JPEG2000 présentée en relation avec la Fig. 4B et la chaîne de réception I-UWB présentée en relation avec la Fig. 5B.

Dans une étape 701, le dispositif de communication 103 reçoit des données via le canal de transmission, en provenance du dispositif de communication 102. Les données vidéo reçues correspondent à des cartes de vitesse, à des valeurs de contrastes et à des données vidéo compressées.

Dans une étape 702 suivante, le dispositif de communication 103 reconstruit des images à partir des données vidéo compressées reçues à l'étape 701. Le dispositif de communication 103 applique d'abord la chaîne de réception I-UWB déjà décrite en relation avec la Fig. 5B, puis la chaîne de décodage JPEG2000 déjà décrite en relation avec la Fig. 4B. En d'autres termes, le dispositif de communication 103 effectue l'opération inverse de l'opération d'étalement effectuée par le dispositif de communication 102 à l'étape 610, puis l'opération inverse de l'opération de décomposition par ondelettes effectuée par le dispositif de communication 102 à l'étape 608.

Dans une étape 703 suivante, le dispositif de communication 103 effectue la même opération que celle effectuée par le dispositif de communication 102 à l'étape 603, mais en se servant des images reconstruites. Le dispositif de communication 103 obtient donc, pour chaque image reconstruite, une valeur de contraste C'. Cette valeur de contraste C' permet d'évaluer la distorsion subie par les images suite à l'opération de compression et de transmission par courants porteurs en ligne.

Dans une étape 704 suivante, le dispositif de communication 103 obtient un découpage en séquences d'images, c'est-à-dire des groupes d'images GOPs. Soit le dispositif de communication 103 effectue la même opération que celle effectuée par le dispositif de communication 102 à l'étape 602, mais en se servant des images reconstruites. Soit le dispositif de communication 102 communique au dispositif de communication 103 des informations relatives au découpage en séquences d'images effectué à l'étape 602.

Dans une étape 705 suivante, le dispositif de communication 103 compare, pour chaque image, la valeur de contraste C' avec la valeur de contraste C reçue pour ladite image à l'étape 701. Le dispositif de communication 103 détermine alors un écart entre la valeur de contraste C' et la valeur de contraste C.

Dans une étape 706 suivante, le dispositif de communication 103 vérifie si l'écart maximum, en valeur absolue, entre la valeur de contraste C' et la valeur de contraste C des images reconstruites pour une même séquence d'images est supérieur à un seuil prédéfini. De manière alternative, le dispositif de communication 103 pourrait vérifier si un écart moyenné en valeur absolue entre la valeur de contraste C' et la valeur de contraste C des images reconstruites pour une même séquence d'images est supérieur à un seuil prédéfini. En d'autres termes, le dispositif de communication 103 vérifie si la distorsion subie par les images suite à l'opération de compression et de transmission par courants porteurs en ligne est supérieure à un seuil prédéfini. Si l'écart vérifié est supérieur au seuil prédéfini, une étape 707 est effectuée ; sinon, une étape 708 est effectuée.

Dans l'étape 707, le dispositif de communication 103 met en oeuvre une opération d'amélioration de résolution par interpolation inter-image pour la séquence d'images concernée, sur la base des cartes de vitesse générées par le dispositif de communication 102 à l'étape 605 et reçues par le dispositif de communication 103 à l'étape 701. Les cartes de vitesse étant représentatives du déplacement de chaque point d'image entre deux images consécutives d'un même groupe d'images GOP, les cartes de vitesse permettent par définition au dispositif de communication 103 d'affiner une image dans une résolution donnée à partir de cette même image dans une résolution inférieure et de l'image précédente dans ladite résolution donnée, comme l'indique l'équation du flot optique. Une interpolation du second ordre du développement de Taylor peut être mise en oeuvre pour ce faire.

Le dispositif de communication 103 peut en outre appliquer, sur la séquence d'images considérées, un filtrage temporel d'ordre 2 sur les composantes à deux dimensions d'ondelettes compensées en mouvement pour lesquelles un mécanisme d'élévation a été appliqué à l'étape 608, et ensuite, l'étape 708 est effectuée. Ce filtrage d'ordre 2 permet d'améliorer la qualité visuelle d'une vidéo bruitée.

Ce filtrage temporel d'ordre 2 appliqué aux images est réalisé suivant les formules suivantes :

$$h_k[m] = x_{2k+1}[m] - \frac{1}{2}\left(x_{2k}[m + v_{2k+1\to 2k}(m)] + x_{2k+2}[m + v_{2k+1\to 2k+2}(m)]\right)$$

$$l_k[m] = x_{2k}[m]$$

où $x_k$ désigne l'image du groupe d'image GOP à un instant k,

où $x_i[m + v_{i+j\to i}(m)]$ représente l'image compensée en mouvement de $x_i$,

et où $h_k$ et $l_k$ représentent respectivement des filtres passe-haut et passe-bas du filtrage temporel d'ordre 2.

Dans l'étape 708, le dispositif de communication 103 fournit au dispositif récepteur 104 les données vidéo issues de l'opération de reconstruction effectuée à l'étape 702, éventuellement modifiées par l'opération d'amélioration de résolution effectuée à l'étape 707.

## Revendications

1. Procédé de transmission de données vidéo sur un canal de transmission par courants porteurs en ligne, un premier dispositif de communication (102) obtenant (601) des données vidéo sous la forme d'une succession d'images non compressées,, le premier dispositif de communication effectuant les étapes suivantes :

   - décomposition (606) par ondelettes de chaque image non compressée, la décomposition permettant d'obtenir des données de résolutions différentes ;
   - compression (609) de chaque image décomposée par ondelettes ;
   - transmission (611), impulsionnelle et par étalement, de chaque image compressée à destination d'un second dispositif de communication (103), de manière à introduire une redondance de données dont le taux, pour chaque donnée de ladite image compressée, est défini en fonction de la résolution de ladite donnée vidéo, la redondance des données de plus basse résolution étant supérieure à celle des données de toute autre résolution ;

   **caractérisé en ce que** le premier dispositif effectue les étapes suivantes :

   - découpage (602) de la succession d'images non compressées en séquences d'images non compressées, par détection de changements de scènes sur la base de différences d'histogrammes de luminance entre deux images consécutives ;
   - détermination (607) de cartes de vitesse représentatives du déplacement des pixels d'une image non compressée à une image non compressée suivante dans une même séquence d'images non compressées ;

- transmission (608) des cartes de vitesse obtenues au second dispositif de communication pour permettre audit second dispositif de communication d'appliquer (707) une opération d'amélioration d'image par interpolation inter-image pour au moins une séquence d'images reconstruites, sur la base desdites cartes de vitesse ; et
- détermination (605) de la capacité du canal de transmission par courants porteurs en ligne et, mise en oeuvre de la compression (609) de chaque image décomposée par ondelettes, en fonction de la capacité déterminée du canal de transmission par courants porteurs en ligne ;

et **en ce que**, pour déterminer les cartes de vitesse, le premier dispositif de communication applique un algorithme de somme des différences absolues à chaque sous-bande de chaque niveau de résolution, et détermine une carte de vitesse, pour chaque niveau de résolution, à partir des résultats d'application de l'algorithme de somme des différences absolues à chaque sous-bande dudit niveau de résolution.

2. Procédé de transmission selon la revendication 1, **caractérisé en ce que** le taux de redondance des données de chaque image compressée est supérieur au taux de redondance des données, de ladite image compressée, de toute autre résolution supérieure.

3. Procédé de transmission selon l'une quelconque des revendications 1 et 2, **caractérisé en ce que** le second dispositif de communication effectue les étapes suivantes :

- reconstruction (702) d'images non compressées à partir de données reçues du premier dispositif de communication via le canal de transmission par courants porteurs en ligne ;
- obtention (704) d'un découpage en séquences des images reconstruites ;
- application (707) de l'opération d'amélioration d'image par interpolation inter-image pour au moins une séquence d'images reconstruites, sur la base desdites cartes de vitesse.

4. Procédé de transmission selon la revendication 3, **caractérisé en ce que** la décomposition en ondelettes est une décomposition en ondelettes de seconde génération, et **en ce que**, dans l'opération d'amélioration d'image pour ladite séquence d'images reconstruites, le second dispositif de communication applique un filtre temporel d'ordre 2 sur les composantes à deux dimensions des ondelettes.

5. Procédé de transmission selon l'une quelconque des revendications 3 et 4, **caractérisé en ce que** le premier dispositif de communication effectue les étapes suivantes :

- détermination (603) pour chaque pixel de chaque image non compressée d'une première valeur de contraste par rapport à des pixels voisins ;
- transmission (604) au second dispositif de communication des premières valeurs de contraste déterminées.

et **en ce que** le second dispositif de communication effectue les étapes suivantes :

- détermination (703) pour chaque pixel de chaque image reconstruite d'une seconde valeur de contraste par rapport à des pixels voisins ;
- comparaison (705) des secondes valeurs de contraste avec les premières valeurs de contraste ;
- décision (706) d'appliquer ou pas l'opération d'amélioration d'image, en fonction de ladite comparaison.

6. Procédé de transmission selon l'une quelconque des revendications 1 à 5, **caractérisé en ce que**, pour déterminer les cartes de vitesse, le premier dispositif de communication effectue les étapes suivantes :

- détermination de vecteurs de mouvement pour un premier niveau de résolution ; et
- détermination de zones de recherche pour application d'un algorithme de correspondance de macro-blocks dans un second niveau de résolution d'ordre supérieur audit premier niveau de résolution, en appliquant une marge autour des vecteurs de mouvement déterminés pour ledit premier niveau de résolution.

7. Procédé de transmission selon l'une quelconque des revendications 1 à 6, **caractérisé en ce que**, pour chaque niveau de résolution, des coefficients de pondération sont appliqués sur les résultats de l'algorithme de somme des différences absolues appliqué à chaque sous-bande dudit niveau de résolution, lesdits coefficients de pondération étant définis de manière à minimiser une métrique de distorsion résiduelle sous une contrainte de débit autorisé par la capacité du canal de transmission par courants porteurs en ligne.

8. Procédé de transmission selon l'une quelconque des revendications 1 à 7, **caractérisé en ce que**, lorsque, dans les cartes de vitesse, un vecteur de mouvement est tel que le minimum entre les valeurs absolues des composantes dudit vecteur de mouvement est supérieur à un premier seuil prédéfini, le premier dispositif considère que ledit vecteur de mouvement est égal à un vecteur de mouvement associé à une compensation de mouvement caméra.

9. Procédé de transmission selon l'une quelconque des revendications 1 à 8, **caractérisé en ce que**, lorsque, dans les cartes de vitesse, un vecteur de mouvement est tel que la somme des valeurs absolues des composantes dudit vecteur de mouvement est inférieure à un second seuil prédéfini, le premier dispositif considère que ledit vecteur de mouvement est égal à un vecteur de mouvement associé à une compensation de mouvement caméra.

10. Procédé de transmission selon l'une quelconque des revendications 8 et 9, **caractérisé en ce que** le premier dispositif encode les cartes de vitesse de manière différentielle par rapport au vecteur de mouvement associé à la compensation de mouvement caméra.

11. Procédé de transmission selon l'une quelconque des revendications 1 à 10, **caractérisé en ce que** la décomposition par ondelettes et la compression effectuées par le premier dispositif de communication reposent sur une chaîne d'encodage de type JPEG2000.

12. Procédé de transmission selon l'une quelconque des revendications 1 à 11, **caractérisé en ce que** la transmission, impulsionnelle et par étalement effectuée par le premier dispositif de communication repose sur une chaîne de transmission de type I-UWB.

13. Procédé de transmission selon la revendication 12, **caractérisé en ce que** la chaîne de transmission de type I-UWB comporte un encodeur de type LDPC afin d'introduire ladite redondance de données.

14. Système de transmission de données vidéo sur un canal de transmission par courants porteurs en ligne, ledit système comportant au moins un premier dispositif de communication (102) comportant des moyens d'obtention (601) de données vidéo sous la forme d'une succession d'images non compressées, le premier dispositif de communication comportant en outre :

   - des moyens de décomposition (606) par ondelettes de chaque image non compressée, permettant d'obtenir des données de résolutions différentes ;
   - des moyens de compression (609) de chaque image décomposée par ondelettes ;
   - des moyens de transmission (611), impulsionnelle et par étalement, de chaque image compressée, de manière à introduire une redondance de données dont le taux, pour chaque donnée de ladite image compressée, est défini en fonction de la résolution de ladite donnée vidéo, la redondance des données de plus basse résolution étant supérieure à celle des données de toute autre résolution

   **caractérisé en ce que** le premier dispositif comporte en outre :

   - des moyens de découpage (602) de la succession d'images non compressées en séquences d'images non compressées, par détection de changements de scènes sur la base de différences d'histogrammes de luminance entre deux images consécutives ;
   - des moyens de détermination (607) de cartes de vitesse représentatives du déplacement des pixels d'une image non compressée à une image non compressée suivante dans une même séquence d'images non compressées ;
   - des moyens de transmission (608) des cartes de vitesse obtenues au second dispositif de communication pour permettre audit second dispositif de communication d'appliquer (707) une opération d'amélioration d'image par interpolation inter-image pour au moins une séquence d'images reconstruites, sur la base desdites cartes de vitesse ; et
   - des moyens de détermination (605) de la capacité du canal de transmission par courants porteurs en ligne et, mise en oeuvre de la compression (609) de chaque image décomposée par ondelettes, en fonction de la capacité déterminée du canal de transmission par courants porteurs en ligne ;

   et **en ce que**, pour déterminer les cartes de vitesse, le premier dispositif de communication comporte des moyens d'application d'un algorithme de somme des différences absolues à chaque sous-bande de chaque niveau de résolution, et de détermination d'une carte de vitesse, pour chaque niveau de résolution, à partir des résultats d'application de l'algorithme de somme des différences absolues à chaque sous-bande dudit niveau de résolution.

**Patentansprüche**

1. Verfahren zur Übertragung von Videodaten über einen Kanal zur Übertragung mittels Stromleitungskommunikation, wobei eine erste Kommunikationsvorrichtung (102) Videodaten in Form von einer Folge von unkomprimierten Bildern erhält (601), wobei die erste Kommunikationsvorrichtung die folgenden Schritte durchführt:

   - Zerlegen (606) durch Wavelets jedes unkomprimierten Bildes, wobei das Zerlegen ermöglicht, Daten unterschiedlicher Auflösungen zu erhalten;
   - Komprimieren (609) jedes Bildes, das durch Wavelets zerlegt wird;
   - Übertragen (611) durch Impulse und durch Spreizung jedes komprimierten Bildes an eine zweite Kommunikationsvorrichtung (103), derart, um eine Datenredundanz einzuführen, deren Rate für jedes einzelne Informationselement des komprimierten Bildes in Abhängigkeit von der Auflösung der Videodaten definiert wird, wobei die Redundanz der Daten der niedrigsten Auflösung größer ist als jene der Daten von jeder anderen Auflösung;

   **dadurch gekennzeichnet, dass** die erste Vorrichtung die folgenden Schritte durchführt:

   - Zerlegen (602) der Folge von unkomprimierten Bildern in Sequenzen von unkomprimierten Bildern durch Erfassen von Szenenänderungen auf der Grundlage von Differenzen der Leuchtdichte-Histogramme zwischen zwei aufeinanderfolgenden Bildern;
   - Bestimmen (607) von Geschwindigkeitskarten, die für die Verschiebung der Pixel eines unkomprimierten Bildes zu einem nachfolgenden unkomprimierten Bild in einer gleichen Sequenz von unkomprimierten Bildern repräsentativ sind;
   - Übertragen (608) der erhaltenen Geschwindigkeitskarten an die zweite Kommunikationsvorrichtung, um der zweiten Kommunikationsvorrichtung zu ermöglichen, einen Bildverbesserungsvorgang durch Zwischenbildinterpolation für mindestens eine Sequenz von rekonstruierten Bildern auf der Grundlage der Geschwindigkeitskarten anzuwenden (707) und
   - Bestimmen (605) der Kapazität des Kanals zur Übertragung mittels Stromleitungskommunikation und Umsetzen der Kompression (609) jedes Bildes, das durch Wavelets zerlegt wird, in Abhängigkeit von der bestimmten Kapazität des Kanals zur Übertragung mittels Stromleitungskommunikation;

   und dass, um die Geschwindigkeitskarten zu bestimmen, die erste Kommunikationsvorrichtung einen Summenalgorithmus der absoluten Differenzen auf jedes Unterband von jeder Auflösungsstufe anwendet und eine Geschwindigkeitskarte für jede Auflösungsstufe ausgehend von den Ergebnissen des Anwendens des Summenalgorithmus der absoluten Differenzen auf jedes Unterband der Auflösungsstufe bestimmt.

2. Verfahren zur Übertragung nach Anspruch 1, **dadurch gekennzeichnet, dass** die Redundanzrate der Daten von jedem komprimierten Bild höher als die Redundanzrate der Daten des komprimierten Bildes von jeder anderen höheren Auflösung ist.

3. Verfahren zur Übertragung nach einem der Ansprüche 1 und 2, **dadurch gekennzeichnet, dass** die zweite Kommunikationsvorrichtung die folgenden Schritte durchführt:

   - Rekonstruieren (702) von unkomprimierten Bildern ausgehend von den Daten, die von der ersten Kommunikationsvorrichtung über den Kanal zur Übertragung mittels Stromleitungskommunikation empfangen werden;
   - Erhalten (704) einer Zerlegung in Sequenzen der rekonstruierten Bilder;
   - Anwenden (707) des Bildverbesserungsvorgangs durch Zwischenbildinterpolation für mindestens eine Sequenz von rekonstruierten Bildern auf der Grundlage der Geschwindigkeitskarten.

4. Verfahren zur Übertragung nach Anspruch 3, **dadurch gekennzeichnet, dass** das Zerlegen in Wavelets ein Zerlegen in Wavelets der zweiten Generation ist, und dass bei dem Bildverbesserungsvorgang für die Sequenz von rekonstruierten Bildern die zweite Kommunikationsvorrichtung einen Zeitfilter 2. Ordnung auf die zweidimensionalen Wavelet-Komponenten anwendet.

5. Verfahren zur Übertragung nach einem der Ansprüche 3 und 4, **dadurch gekennzeichnet, dass** die erste Kommunikationsvorrichtung die folgenden Schritte durchführt:

   - Bestimmen (603) für jedes Pixel von jedem unkomprimierten Bild eines ersten Kontrastwertes gegenüber von benachbarten Pixeln;

- Übertragen (604) der ersten bestimmten Kontrastwerte an die zweite Kommunikationsvorrichtung,

und dass die zweite Kommunikationsvorrichtung die folgenden Schritte durchführt:

- Bestimmen (703) für jedes Pixel von jedem rekonstruierten Bild eines zweiten Kontrastwertes gegenüber von benachbarten Pixeln;
- Vergleichen (705) der zweiten Kontrastwerte mit den ersten Kontrastwerten;
- Entscheiden (706) in Abhängigkeit von dem Vergleichen, ob der Bildverbesserungsvorgang angewendet werden soll oder nicht.

6. Verfahren zur Übertragung nach einem der Ansprüche 1 bis 5, **dadurch gekennzeichnet, dass** die erste Kommunikationsvorrichtung zum Bestimmen der Geschwindigkeitskarten die folgenden Schritte durchführt:

- Bestimmen von Bewegungsvektoren für eine erste Auflösungsstufe und
- Bestimmen von Suchbereichen für das Anwenden eines Matching-Algorithmus von Makroblöcken in einer zweiten Auflösungsstufe von höherer Ordnung als die erste Auflösungsstufe, indem eine Spanne um die Bewegungsvektoren angewendet wird, die für die erste Auflösungsstufe bestimmt werden.

7. Verfahren zur Übertragung nach einem der Ansprüche 1 bis 6, **dadurch gekennzeichnet, dass** für jede Auflösungsstufe Gewichtungskoeffizienten auf die Ergebnisse des Summenalgorithmus der absoluten Differenzen, der auf jedes Unterband der Auflösungsstufe angewendet wird, angewendet werden, wobei die Gewichtungskoeffizienten derart definiert werden, um eine Metrik einer Restverzerrung unter einer Beschränkung des Durchsatzes, der von der Kapazität des Kanals zur Übertragung mittels Stromleitungskommunikation zugelassen wird, zu minimieren.

8. Verfahren zur Übertragung nach einem der Ansprüche 1 bis 7, **dadurch gekennzeichnet, dass**, wenn in den Geschwindigkeitskarten ein Bewegungsvektor derart ist, dass das Minimum unter den Absolutwerten der Komponenten des Bewegungsvektors größer als ein erster vordefinierter Schwellenwert ist, die erste Vorrichtung davon ausgeht, dass der Bewegungsvektor gleich einem Bewegungsvektor ist, der mit einer Kamerabewegungskompensation verbunden wird.

9. Verfahren zur Übertragung nach einem der Ansprüche 1 bis 8, **dadurch gekennzeichnet, dass**, wenn in den Geschwindigkeitskarten ein Bewegungsvektor derart ist, dass die Summe der Absolutwerte der Komponenten des Bewegungsvektors niedriger als ein zweiter vordefinierter Schwellenwert ist, die erste Vorrichtung davon ausgeht, dass der Bewegungsvektor gleich einem Bewegungsvektor ist, der mit einer Kamerabewegungskompensation verbunden wird.

10. Verfahren zur Übertragung nach einem der Ansprüche 8 und 9, **dadurch gekennzeichnet, dass** die erste Vorrichtung die Geschwindigkeitskarten in differenzieller Weise relativ zu dem Bewegungsvektor codiert, der mit der Kamerabewegungskompensation verbunden wird.

11. Verfahren zur Übertragung nach einem der Ansprüche 1 bis 10, **dadurch gekennzeichnet, dass** das Zerlegen durch Wavelets und das Komprimieren, welche durch die erste Kommunikationsvorrichtung durchgeführt werden, auf einer Codierungskette des Typs JPEG2000 basieren.

12. Verfahren zur Übertragung nach einem der Ansprüche 1 bis 11, **dadurch gekennzeichnet, dass** das Übertragen durch Impulse und durch Spreizung, das durch die erste Kommunikationsvorrichtung durchgeführt wird, auf einer Übertragungskette des Typs I-UWB basiert.

13. Verfahren zur Übertragung nach Anspruch 12, **dadurch gekennzeichnet, dass** die Übertragungskette des Typs I-UWB einen LDPC-Encoder aufweist, um die Datenredundanz einzuführen.

14. System zur Übertragung von Videodaten über einen Kanal zur Übertragung mittels Stromleitungskommunikation, wobei das System mindestens eine erste Kommunikationsvorrichtung (102) aufweist, die Mittel zum Erhalten (601) von Videodaten in Form von einer Folge von unkomprimierten Bildern aufweist, wobei die erste Kommunikationsvorrichtung ferner Folgendes aufweist:

- Mittel zum Zerlegen (606) durch Wavelets jedes unkomprimierten Bildes, die ermöglichen, Daten unterschiedlicher Auflösungen zu erhalten;

- Mittel zum Komprimieren (609) jedes Bildes, das durch Wavelets zerlegt ist;
- Mittel zum Übertragen (611) durch Impulse und durch Spreizung jedes komprimierten Bildes, derart, um eine Datenredundanz einzuführen, deren Rate für jedes einzelne Informationselement des komprimierten Bildes in Abhängigkeit von der Auflösung der Videodaten definiert ist, wobei die Redundanz der Daten der niedrigsten Auflösung größer ist als jene der Daten von jeder anderen Auflösung;

**dadurch gekennzeichnet, dass** die erste Vorrichtung ferner Folgendes aufweist:

- Mittel zum Zerlegen (602) der Folge von unkomprimierten Bildern in Sequenzen von unkomprimierten Bildern durch Erfassen von Szenenänderungen auf der Grundlage von Differenzen der Leuchtdichte-Histogramme zwischen zwei aufeinanderfolgenden Bildern;
- Mittel zum Bestimmen (607) von Geschwindigkeitskarten, die für die Verschiebung der Pixel von einem unkomprimierten Bild zu einem nachfolgenden unkomprimierten Bild in einer gleichen Sequenz von unkomprimierten Bildern repräsentativ sind;
- Mittel zum Übertragen (608) der erhaltenen Geschwindigkeitskarten an die zweite Kommunikationsvorrichtung, um der zweiten Kommunikationsvorrichtung zu ermöglichen, einen Bildverbesserungsvorgang durch Zwischenbildinterpolation für mindestens eine Sequenz von rekonstruierten Bildern auf der Grundlage der Geschwindigkeitskarten anzuwenden (707) und
- Mittel zum Bestimmen (605) der Kapazität des Kanals zur Übertragung mittels Stromleitungskommunikation und zum Umsetzen der Kompression (609) von jedem Bild, das durch Wavelets zerlegt ist, in Abhängigkeit von der bestimmten Kapazität des Kanals zur Übertragung mittels Stromleitungskommunikation;

und dass, um die Geschwindigkeitskarten zu bestimmen, die erste Kommunikationsvorrichtung Mittel zum Anwenden eines Summenalgorithmus der absoluten Differenzen auf jedes Unterband von jeder Auflösungsstufe und zum Bestimmen einer Geschwindigkeitskarte für jede Auflösungsstufe ausgehend von den Ergebnissen des Anwendens des Summenalgorithmus der absoluten Differenzen auf jedes Unterband der Auflösungsstufe aufweist.

## Claims

1. Method for transmitting video data over a powerline communications transmission channel, a first communication device (102) obtaining (601) video data in the form of a succession of uncompressed images, the first communication device performing the following steps:

   - wavelet-decomposition (606) of each uncompressed image, the decomposition enabling obtaining data with different resolutions;
   - compression (609) of each wavelet-decomposed image;
   - transmission (611), in pulse form with spreading, of each compressed image to a second communication device (103), so as to introduce data redundancy, the rate of which, for each data item in said compressed image, is defined according to the resolution of said video data item, the redundancy of the data with the lowest resolution being greater than the one of the data of any other resolution;

   **characterised in that** the first device performs the following steps:

   - division (602) of the succession of uncompressed images into uncompressed image sequences, by detecting changes in scenes on the basis of differences in luminance histograms between two consecutive images;
   - determination (607) of speed maps representing the motion of the pixels of an uncompressed image to a following uncompressed image in the same sequence of uncompressed images;
   - transmission (608) of the obtained speed maps to the second communication device to enable said second communication device to apply (707) an image enhancement operation by inter-image interpolation for at least one sequence of reconstructed images, on the basis of said speed maps; and
   - determination (605) of the capacity of the powerline communications transmission channel and implementation of the compression (609) of each wavelet-decomposed image, according to the determined capacity of the powerline communications transmission channel;

   and **in that**, for determining the speed maps, the first communication device applies a sum of absolute differences algorithm to each sub-band of each resolution level, and determines a speed map, for each resolution level, from the results of applying the sum of absolute differences algorithm to each sub-band of said resolution level.

**2.** Transmission method according to claim 1, **characterised in that** the redundancy rate of the data of each compressed image is greater than the redundancy rate of the data, in said compressed image, with any other higher resolution.

**3.** Transmission method according to any one of claims 1 and 2. **characterised in that** the second communication device performs the following steps:

- reconstructing (702) uncompressed images from data received from the first communication device via the powerline communications transmission channel;
- obtaining (704) a division of the reconstructed images into sequences;
- applying (707) the image-enhancement operation by inter-image interpolation for at least one sequence of reconstructed images, on the basis of said speed maps.

**4.** Transmission method according to claim 3, **characterised in that** the wavelet-decomposition is a second-generation wavelet decomposition and **in that**, in the image-enhancement operation for said sequence of reconstructed images, the second communication device applies a second-order temporal filtering to the two-dimensional components of the wavelets.

**5.** Transmission method according to any one of claims 3 and 4, **characterised in that** the first communication device performs the following steps:

- determining (603) for each pixel of each uncompressed image a first contrast value with respect to adjacent pixels;
- transmitting (604) to the second communication device the determined first contrast values;

and **in that** the second communication device performs the following steps:

- determining (703) for each pixel of each reconstructed image a second contrast value with respect to adjacent pixels;
- comparison of (705) the second contrast values with the first contrast values;
- deciding (706) to apply or not the image enhancement operation, according to said comparison.

**6.** Transmission method according to any one of claims 1 to 5, **characterised in that**, for determining the speed maps, the first communication device performs the following steps:

- determining motion vectors for a first resolution level; and
- determining search zones for applying a macroblock matching algorithm in a second resolution level of a higher order than said first resolution level, by applying a margin around the motion vectors determined for said first resolution level.

**7.** Transmission method according to any one of claims 1 to 6, **characterised in that**, for each resolution level, weighting coefficients are applied to the results of the sum of absolute differences algorithm applied to each sub-band of said resolution level, said weighting coefficients being defined so as to minimise a residual distortion metric under a bitrate constraint enabled by the capacity of the powerline communications transmission channel.

**8.** Transmission method according to any one of claims 1 to 7, **characterised in that**, when, in the speed maps, a motion vector is such that the minimum between the absolute values of the components of said motion vector is higher than a first predefined threshold, the first device considers that said motion vector is equal to a motion vector associated with a camera motion compensation.

**9.** Transmission method according to any one of claims 1 to 8, **characterised in that**, when, in the speed maps, a motion vector is such that the sum of the absolute values of the components of said motion vector is lower than a second predefined threshold, the first device considers that said motion vector is equal to a motion vector associated with a camera motion compensation.

**10.** Transmission method according to any one of claims 8 and 9, **characterised in that** the first device encodes the speed maps differentially with respect to the motion vector associated with the camera motion compensation.

**11.** Transmission method according to any one of claims 1 to 10, **characterised in that** the wavelet-decomposition and the compression performed by the first communication device are based on an encoding chain of the JPEG 2000 type.

**12.** Transmission method according to any one of claims 1 to 11, **characterised in that** the transmission, in pulse form with spreading, performed by the first communication device is based on a transmission chain of the I-UWB type.

**13.** Transmission method according to claim 12, **characterised in that** the I-UWB transmission chain comprises an encoder of the LDPC type in order to introduce said data redundancy.

**14.** System for transmitting video data over a powerline communications transmission channel, said system comprising at least one first communication device (102) comprising means (601) for obtaining video data in the form of a succession of uncompressed images, the first communication device further comprising:

- means for performing a wavelet-decomposition (606) of each uncompressed image, enabling obtaining data with different resolutions;
- means for compressing (609) each wavelet-decomposed image;
- means for transmitting (611), in pulse form with spreading, each compressed image, so as to introduce a data redundancy, the rate of which, for each data item in said compressed image, is defined according to the resolution of said video data item, the redundancy of the data with the lowest resolution being higher than the one of the data with any other resolution;

**characterised in that** the first device further comprises:

- means (602) for dividing the succession of uncompressed images into uncompressed image sequences, by detecting changes in scenes on the basis of differences in luminance histograms between two consecutive images;
- means (607) for determining speed maps representing the motion of the pixels of an uncompressed image to a following uncompressed image in the same sequence of uncompressed images;
- means (608) for transmitting the obtained speed maps to the second communication device to enable said second communication device to apply (707) an image enhancement operation by inter-image interpolation for at least one sequence of reconstructed images, on the basis of said speed maps; and
- means (605) for determining the capacity of the powerline communications transmission channel and for implementing the compression (609) of each wavelet-decomposed image, according to the determined capacity of the powerline communications transmission channel;

and **in that**, for determining the speed maps, the first communication device comprises means for applying a sum of absolute differences algorithm to each sub-band of each resolution level, and for determining a speed map, for each resolution level, from the results of applying the sum of absolute differences algorithm to each sub-band of said resolution level.

```
┌───────┐      ┌───────┐      ┌───────┐      ┌───────┐
│  101  │ ───► │  102  │ ◄──► │  103  │ ───► │  104  │
└───────┘      └───────┘      └───────┘      └───────┘
```

Fig. 1A

```
┌─────────────────────────────────────────┐
│   ┌───────┐   ┌───────┐   ┌───────┐      │
│   │  110  │   │  111  │   │  112  │      │
│   │  CPU  │   │  RAM  │   │  ROM  │      │
│   └───┬───┘   └───┬───┘   └───┬───┘      │
│       │           │           │          │
│   ────┴───────────┴───────────┴──────    │
│           │           │           ⌇ 120  │
│       ┌───┴───┐   ┌───┴───┐              │
│       │       │   │       │              │
│       │  113  │   │  114  │              │
│       └───────┘   └───────┘              │
└─────────────────────────────────────────┘
```

Fig. 1B

```
┌──────────────────────────────────────┐
│      Obtention de données vidéo        │ ⌐200
└──────────────────┬───────────────────┘
                   ▼
┌──────────────────────────────────────┐
│    Détermination de capacité canal     │ ⌐201
└──────────────────┬───────────────────┘
                   ▼
┌──────────────────────────────────────┐
│      Décomposition par ondelettes      │ ⌐202
└──────────────────┬───────────────────┘
                   ▼
┌──────────────────────────────────────┐
│             Compression                │ ⌐203
└──────────────────┬───────────────────┘
                   ▼
┌──────────────────────────────────────────┐
│  Transmission impulsionnelle par étalement │ ⌐204
└──────────────────────────────────────────┘
```

Fig. 2

| 321 | 322 |
|-----|-----|
| 323 | 324 |

| 301 | 302 | 312 | 322 |
| 303 | 304 | | |
| 313 | 314 | | |
| 323 | | | 324 |

Fig. 3

401 → 402 → 403

404 → 405 → 406

Fig. 4A

Fig. 4B

Fig. 5A

Fig. 5B

Obtention de données vidéo ⌐601

Découpage en séquences d'images ⌐602

Détermination d'une valeur de contraste par pixel ⌐603

Transmission des valeurs de contraste ⌐604

Détermination de capacité canal ⌐605

Décomposition par ondelettes ⌐606

Détermination de cartes de vitesse ⌐607

Transmission des cartes de vitesse ⌐608

Compression ⌐609

Etalement ⌐610

Transmission ⌐611

Fig. 6

```
┌─────────────────────────────┐
│         Réception           │ ⌐701
└─────────────────────────────┘
              │
              ▼
┌─────────────────────────────┐
│  Reconstruction des images vidéo │ ⌐702
└─────────────────────────────┘
              │
              ▼
┌──────────────────────────────────────┐
│ Détermination d'une valeur de contraste par pixel │ ⌐703
└──────────────────────────────────────┘
              │
              ▼
┌──────────────────────────────────────┐
│ Obtention d'un découpage en séquences d'images │ ⌐704
└──────────────────────────────────────┘
              │
              ▼
┌──────────────────────────────────────┐
│ Comparaison de valeurs de contraste par pixel │ ⌐705
└──────────────────────────────────────┘
              │
              ▼
        oui ╱  Ecart supérieur à un  ╲ non
           ╱        seuil ?           ╲
           ╲                          ╱
            ╲_____╱
                     706
     │                              │
     ▼                              │
┌─────────────────────────┐        │
│ Amélioration de résolution │ ⌐707  │
└─────────────────────────┘        │
     │                              │
     ▼                              │
┌─────────────────────────────┐
│  Fourniture des images vidéo │ ⌐708
└─────────────────────────────┘
```

Fig. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 20070086080 A2

**Littérature non-brevet citée dans la description**

- **GI HUN LEE et al.** Three-dimensional DCT/WT compression using motion vector segmentation for low nit-rate video coding. *IEEE Procceedings / International Conference on Image Processing,* 26 Octobre 1997, vol. 3, 456-459
- **YA-QIN ZHANG et al.** Motion-compensated wavelet transform coding for color video compression. *IEEE Transactions on Circuits and Systems for Video Technology,* 01 Septembre 1992, vol. 2 (3), 285-296
- **A. SECKER et al.** Motion-compensated highly scalable video compression using an adaptive 3D wavelet transform based on lifting. *IEEE Proceedings / International Conference on Image Processing,* 07 Octobre 2001, 1029-1032
- **DURISI ; BENEDETTO.** Performance Evaluation and Comparison of Different Modulation Schemes for UWB Multiaccess Systems. *IEEE International Conference on Communications,* Mai 2003
- The Lifting Scheme: A Construction of Second Generation Wavelets. *Society for Industrial and Applied Mathematics (SIAM), SIAM Journal on Mathematical Analysis,* 1997, vol. 29 (2), 511-546